# EUROPÄISCHE PATENTANMELDUNG

(11) **EP 1 764 165 A2**
(43) Veröffentlichungstag der Anmeldung: **21.03.2007**
(21) Anmeldenummer: 06019588.0
(22) Anmeldetag: 19.09.2006
(51) Int. Cl.: B08B 3/02, A01M 21/04

(54) **Mobile Vorrichtung zum Behandeln einer Oberfläche**

(30) Priorität: 19.09.2005 DE 102005044715
(71) Anmelder: PST_TEC GmbH, 53949 Dahlem-Schmidtheim (DE)
(72) Erfinder: Wassenburger, Jörg, 53949 Dahlem-Schmidtheim (DE)
(74) Vertreter: Patentanwaltskanzlei Liermann-Castell

(57) **Zusammenfassung**

Um insbesondere Dampfreinigungsvorrichtungen weiter zu entwickeln, schlägt die Erfindung eine mobile Vorrichtung zum Behandeln einer Oberfläche mittels Heißwasser und/oder Heißdampf vor, wobei die Vorrichtung eine Energieversorgungseinrichtung zum Bereitstellen von elektrischer Energie zum autarken Betreiben der mobilen Vorrichtung aufweist.

## Beschreibung

Die Erfindung betrifft sowohl eine mobile Vorrichtung als auch ein Verfahren zum Behandeln einer Oberfläche mittels eines Mediums wie Heißwasser und/oder Heißdampf. Des Weiteren betrifft die Erfindung ein Verfahren zum Betreiben einer derartigen mobilen Vorrichtung.

Gattungsgemäße Vorrichtungen und Verfahren sind aus dem Stand der Technik bekannt. So ist beispielsweise aus der Offenlegungsschrift DE 197 29 683 A1 ein Verfahren und eine Vorrichtung zum Beseitigen von Wildkraut mittels eines Heißwassers bzw. Heißdampfes mit einer Temperatur von mindestens 140 °C bekannt.

Die dort beschriebene mobile Vorrichtung hat einen Vorratsbehälter für Wasser, eine an diesen angeschlossene Druckpumpe, eine Heizeinrichtung zum Aufheizen des Wassers sowie mindestens eine Düse zum Aufsprühen von Heißdampf auf eine Oberfläche und eine Leitungsanordnung zwischen den beschriebenen Bauteilen. Die Vorrichtung ist dafür vorgesehen, an eine Trägereinrichtung, wie etwa ein kommunales Sprengfahrzeug oder ein sonstiges Nutzfahrzeug, insbesondere an dessen Fronthydraulik, angeordnet bzw. angeschlossen zu werden. Dies ist auch zwingend erforderlich, da die vorbenannte Vorrichtung für Ihre ordnungsgemäße Funktion weitere Hilfsaggregate benötigt. Insbesondere ist es erforderlich, dass die Vorrichtung an einen Generator, beispielsweise an einen Generator eines kommunalen Sprengfahrzeuges oder eines sonstigen Nutzfahrzeuges, angeschlossen werden muss.

Ein derartiges Erfordernis trifft auch auf sonstige bekannte Vorrichtungen zum Erzeugen eines Dampfstrahls zu.

Es ist Aufgabe vorliegender Erfindung gattungsgemäße Vorrichtungen weiter zu entwickeln.

Die Erfindung wird einerseits von einer mobilen Vorrichtung zum Behandeln einer Oberfläche mittels eines Mediums wie Heißwasser und/oder Heißdampf gelöst, wobei sich die Vorrichtung durch eine Energievorsorgungseinrichtung zum Bereitstellen von elektrischer Energie zum autarken Betreiben der Vorrichtung auszeichnet.

Vorteilhafter Weise ist die mobile Vorrichtung erfindungsgemäß nicht mehr von zusätzlichen Aggregaten, wie dies bisher erforderlich ist, abhängig. Vielmehr kann die mobile Vorrichtung vollständig autark betrieben werden, wobei bisher benötigte Nutzfahrzeuge zum Betreiben einer derartigen mobilen Vorrichtung nicht weiter erforderlich sind und vorteilhafter Weise für andere Aufgaben zur Verfügung stehen.

Es versteht sich, dass als Energieversorgungseinrichtung eine Vielzahl an Möglichkeiten zur Verfügung steht. Beispielsweise kann insbesondere die Energieversorgung für einen Kurzeinsatz mittels eines entsprechenden Energiespeichers bereitgestellt werden.

Eine besonders bevorzugte Ausführungsvariante sieht vor, dass die mobile Vorrichtung einen Generator aufweist. Generatoren eignen sich dazu, elektrische Energie mit konstanter Leistung auch über einen längeren Zeitraum zur Verfügung zu stellen.

Um den Generator der vorliegenden mobilen Vorrichtung autark antreiben zu können, ist es vorteilhaft, wenn die mobile Vorrichtung einen Verbrennungsmotor aufweist. Es versteht sich, dass ein derartiger Verbrennungsmotor auf Basis unterschiedlicher Betriebsbrennstoffe betrieben werden kann.

Je nach Umweltschutzanforderungen eines Landes ist es vorteilhaft, wenn der Verbrennungsmotor ein Benzin- oder ein Dieselaggregat aufweist.

Um die mobile Vorrichtung möglichst kompakt bauen zu können, ist es vorteilhaft, wenn der Verbrennungsmotor eine Abgaseinrichtung umfasst, welche in einem Vorrichtungsgestell integriert ist.

Es versteht sich, dass zum Betreiben der mobilen Vorrichtung erforderliches Wasser auf unterschiedlichste Art und Weise erhitzt werden kann. Beispielsweise wird das Wasser unmittelbar mittels des Verbrennungsmotors, insbesondere mittels der Abgase des Verbrennungsmotors erhitzt.

Eine bevorzugte Ausführungsvariante sieht jedoch vor, dass die Vorrichtung eine Gas-/Öl-Brenner-Heizeinrichtung oder eine elektrische Heizeinrichtung aufweist. Mittels der Gas-/Öl-Brenner-Heizeinrichtung oder der elektrischen Heizeinrichtung lassen sich selbst größere Mengen an Wasser problemlos erhitzen.

Es versteht sich, dass vorliegend auch andere Flüssigkeiten als Wasser als Reinigungsmittel verwendet werden können.

Damit dauerhaft auch eine hohe Behandlungstemperatur hinsichtlich des Wassers erzielt wird, ist es vorteilhaft, wenn die Vorrichtung eine Heizeinrichtung mit einer Heizleistung von mehr als 60 kW, vorzugsweise von 80 kW, aufweist.

Insbesondere um den Heißdampf zu erzeugen, ist es vorteilhaft, wenn die mobile Vorrichtung einen Dampferzeuger aufweist.

Es ist vorteilhaft, wenn die mobile Vorrichtung einen Kraftstofftank aufweist.

Ein Bereitstellen von Kraftstoff an der mobilen Vorrichtung ist baulich besonders einfach realisiert, wenn die mobile Vorrichtung einen Kraftstofftank aufweist, der sich dadurch auszeichnet, dass er fest aber austauschbar an der mobilen Vorrichtung befestigt ist. Es hat sich gezeigt, dass es besonders vorteilhaft ist, wenn der Kraftstofftank abnehmbar an der Vorrichtung befestigt ist. Vorteilhafterweise kann die Vorrichtung problemlos mit Kraftstoff versorgt werden, selbst wenn sie isoliert in unwegbarem Gelände stationiert ist. Damit der Transport des Kraftstoffes nicht allzu schwer fällt, ist es vorteilhaft, wenn der Kraftstofftank aus einem handelsüblichen 20 Liter-Kanister, welcher für die Aufnahme von Kraftstoffen geeignet ist, gebildet ist.

Darüber hinaus zeichnet sich vorliegende mobile Vorrichtung durch einen Wassertank aus.

Eine bevorzugte Ausführungsvariante sieht vor, dass der Wassertank aus Edelstahl hergestellt ist. Edelstahl zeichnet sich durch seine hervorragende Korrosionsbeständigkeit aus und ist deshalb besonders gut geeignet, im Zusammenhang mit einem langlebigen Produkt wie vorliegender Vorrichtung verwendet zu werden.

Um mögliche Schäden, beispielsweise durch Überhitzung der Heizeinrichtung bzw. des Dampferzeugers, zu verhindern, ist es vorteilhaft, wenn die Vorrichtung einen Wassermangelwächter aufweist. Der Wassermangelwächter löst ein entsprechendes Signal aus, sobald ein kritischer Wasservorrat unterschritten wird.

Um möglichen Verunreinigungen durch nachgefülltes Wasser frühzeitig entgegen zu wirken, ist es vorteilhaft, wenn die mobile Vorrichtung eine Filtereinrichtung aufweist, welche vorzugsweise im Bereich eines Wassertankeinfüllstutzens angeordnet ist. Mittels einer derart angeordneten Filtereinrichtung ist gewährleistet, dass einzufüllendes Wasser bereits gereinigt bzw. gefiltert wird, bevor es in den Wassertank gelangt.

Um die Gefahr von Korrosionen an der mobilen Vorrichtung, insbesondere an dem Gestell der mobilen Vorrichtung, zu verringern, ist es vorteilhaft, wenn die Vorrichtung ein Gestell aufweist, welches aus Edelstahl hergestellt ist.

Um ein optimales Reinigungsergebnis mit vorliegender mobilen Vorrichtung zu erzielen, zeichnet sich vorliegende mobile Vorrichtung vorteilhafter Weise durch eine digitale Steuer- und Regeleinrichtung aus.

Die Vorrichtung ist vor Fehlbedienungen besonders gut geschützt, wenn die mobile Vorrichtung ein Sicherungsmittel zum Sperren einer Temperatureinstellung des Heißwassers und/oder des Heißdampfes aufweist. Hierdurch ist sichergestellt, dass auch einfach qualifiziertes Personal mit der vorliegenden Vorrichtung gefahrenlos arbeiten kann, ohne dabei unbeabsichtigt an der Vorrichtung eine falsche Temperatureinstellung vorzunehmen. Dies ist besonders vorteilhaft im Hinblick auf unterschiedlichste Anwendungsbereiche für welche die Vorrichtung eingesetzt werden kann. Beispielsweise kann die Vorrichtung auch lediglich zum Reinigen einer weniger hartnäckig verschmutzten Oberfläche eingesetzt werden, wobei mit wesentlich geringeren Temperaturen gearbeitet werden kann, als dies bei hartnäckigen Oberflächenverschmutzungen der Fall ist.

Eine besonders vorteilhafte Ausführungsvariante sieht vor, dass die Sicherungsmittel ein Eingabemittel für einen Sicherungscode aufweisen.

Mittels eines Sicherheitscodes ist gewährleistet, dass nur autorisiertes Personal Einstellungen, beispielsweise eine Temperatureinstellung, an der mobilen Vorrichtung vornehmen kann.

Zur Handhabung der vorliegenden mobilen Vorrichtung kann auf schweres Gerät verzichtet werden, wenn die mobile Vorrichtung ein Gewicht von weniger als 200 kg, vorzugsweise von weniger als 180 kg, aufweist. Eine bevorzugte Ausführungsvariante sieht ein Gewicht von circa 160 kg vor.

Eine weitere Ausführungsvariante sieht eine Absaugeinrichtung zur Rückgewinnung von gebrauchtem Wasser vor.

Auch wenn der Wasserverbrauch der vorliegenden Reinigungsvorrichtung vorteilhafter Weise bereits bei einem geringen Wasserverbrauch von sieben bis acht Litern pro Minute liegt, kann der Wasserverbrauch mittels der Absaugeinrichtung weiter reduziert werden.

Als Absaugvorrichtung im Sinne vorliegender Erfindung ist jede Einrichtung anzusehen, mittels welcher Reste von Heißwasser und/oder Heißdampf abgesaugt und einem Wasserkreislauf zugeführt werden können.

Darüber hinaus ist es vorteilhaft, wenn die Vorrichtung eine Ausbringeinrichtung zum Ausbringen des Heißwassers und/oder des Heißdampfes aufweist, wobei die Ausbringeinrichtung wenigstens zwei Kammern aufweist.

Eine in diesem Zusammenhang vorteilhafte Ausführungsvariante sieht vor, dass die Ausbringeinrichtung zumindest eine Ausbringkammer und eine Absaugkammer aufweist. Vorliegend wird das Heizwasser bzw. der Heizdampf im Bereich der Ausbringkammer in Richtung der zu behandelnden Oberfläche beschleunigt. Dem gegenüber wird verbrauchtes Wasser im Bereich der Absaugkammer wieder aufgenommen und vorzugsweise dem Wassertank wieder zugeführt.

Idealerweise werden hierdurch mehr als 60 %, vorzugsweise mehr als 80 % des Brauchwassers wiederverwendet.

Es versteht sich das die Ausbringeinrichtung je nach Anwendungsbereich unterschiedliche Formen und Gestaltgebungen aufweisen kann.

Insbesondere für eine großflächige Behandlung einer weiten Oberfläche ist es vorteilhaft, wenn die Ausbringeinrichtung eine effektive Reinigungslänge von mehr als einem Meter vorzugsweise von eineinhalb Meter aufweist.

Die Aufgabe der Erfindung wird des Weiteren von einem Verfahren zum Betreiben der vorliegend beschriebenen mobilen Vorrichtung gelöst, bei welchem mittels der mobilen Vorrichtung elektrische Energie erzeugt wird.

Darüber hinaus wird die Erfindung von einem Verfahren zum Behandeln einer Oberfläche mittels eines Mediums, wie Heißwasser und/oder Heißdampf gelöst, bei welchem das Medium mit einer Temperatur oberhalb von 200 °C oder oberhalb von 270 °C auf die Oberfläche aufgetragen wird. Vorteilhafter Weise lässt sich mit diesen Temperaturen eine sichere keimfreie Reinigung auch nach strengeren Reinheitsanforderungen realisieren.

Vorliegend kann die zuvor beschriebene mobile Vorrichtung sowie in das beschriebene Verfahren mit einer Temperatur von bis zu 200 °C im Dauerbetrieb betrieben bzw. durchgeführt werden.

Weitere Vorteile und Eigenschaften vorliegender Erfindung werden an Hand nachfolgender Erläuterung anliegender Zeichnung beschrieben in welcher beispielhaft ein mobiler Dampfreiniger dargestellt ist.

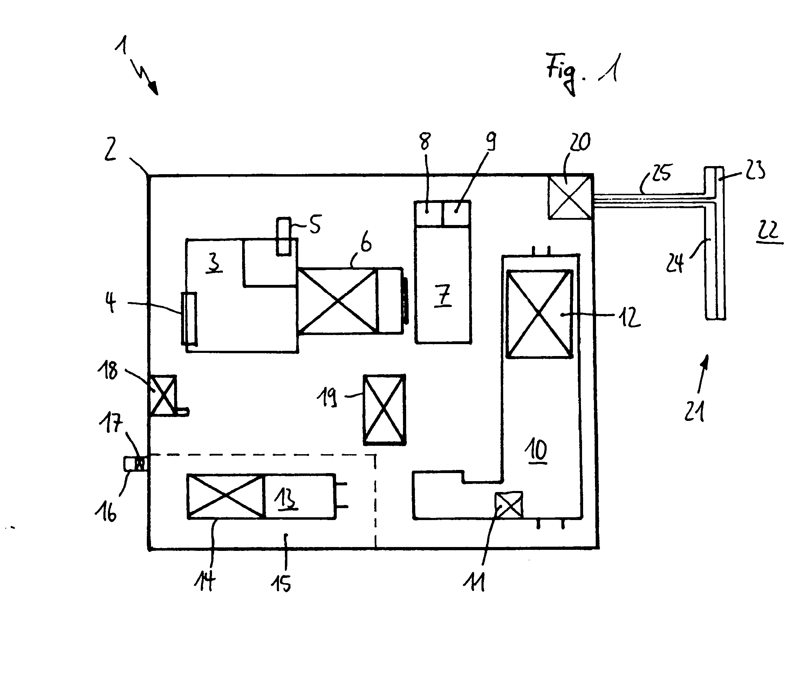

Es zeigt
Figur 1 schematisch einen mobilen Dampfreiniger mit einem Verbrennungsmotor und einem Generator und
Figur 2 ein Ausführungsbeispiel eines mobilen Dampfreinigers.

Der in der Figur gezeigte mobile Dampfreiniger 1 weist ein Gestell 2 aus Edelstahl auf. Innerhalb dieses Edelstahlgestells 2 sind alle erforderlichen Bauteile angeordnet, um den Dampfreiniger 1 autark zu betreiben.

In diesem Ausführungsbeispiel weist der Dampfreiniger 1 einen Dieselverbrennungsmotor 3 mit einer Leistung von ca. 6 kW auf. Der Dieselverbrennungsmotor 3 umfasst einen Elektrostarter 4, sodass der Dieselverbrennungsmotor 3 bedienerfreundlich zu starten ist. Die beim Betrieb des Verbrennungsmotors 3 entstehenden Abgase werden mittels eines Auspuffs 5 abgeleitet. Vorliegend besteht der Auspuff 5 ebenfalls aus Edelstahl und ist Teil des Gestells 2.

Der Verbrennungsmotor 3 treibt hierbei einen Generator 6 an, der eine Spannung von 240 Volt Wechselstrom und 4 kW Leistung bereitstellt. Der Generator 6 versorgt den Dampfreiniger 1 mit elektrischer Energie, sodass der Dampfreiniger 1 unabhängig von einer weiteren elektrischen Energiequelle betrieben werden kann.

Um den Verbrennungsmotor 3 mit Kraftstoff zu versorgen, ist an dem Dampfreiniger 1 ein Wechseltank-System 7 vorgesehen, in welchem ein erster Kraftstoffkanister 8 und ein zweiter Kraftstoffkanister 9 fest aber lösbar an dem Dampfreiniger angeordnet werden können. Vorteilhafterweise ist es mit den auswechselbaren Kraftstoffbehältern 8, 9 möglich, diese zu entnehmen, wenn sie entleert sind, und einzeln an einer Tankstelle wieder zu befüllen. Hierdurch ist es nicht erforderlich, mit einem Tankwagen zum Dampfreiniger 1 zu fahren oder den gesamten Dampfreiniger 1 zu einer Tankstelle zu bringen.

Mittels der wechselbaren Kraftstofftanks 8 und 9 ist ein Betrieb des Dampfreinigers 1, insbesondere ein Befüllen mit Kraftstoff, besonders einfach realisiert.

Darüber hinaus umfasst der Dampfreiniger 1 eine Heizung 10, mittels welcher ein Reinigungsmedium entsprechend den geforderten Reinigungsbedingungen erhitzt wird. Vorliegend handelt es sich um eine Heizung 10 mit einem Ölbrenner 11. Die Heizung 10 verfügt darüber hinaus über eine Brennerüberwachung 12, mittels welcher die Heizleistung des Dampfreinigers 1 überwacht wird.

Um einen genügend hohen Bearbeitungsdruck für das Reinigungsmedium bereitzustellen, verfügt der Dampfreiniger 1 über eine Wasserpumpe 13, die mittels eines Elektromotors 14 angetrieben wird. Die Wasserpumpe 13 bezieht das benötigte Wasser aus einem Wassertank 15, hier nur gestrichelt im Hintergrund dargestellt. Der Wassertank 15 wird mittels eines Einfüllstutzens 16 befüllt. Damit eventuell vorhandene Verunreinigungen des Wassers erst gar nicht in den Wassertank 15 gelangen, ist im Bereich des Einfüllstutzens 16 ein Filter 17 vorgesehen.

Um den Dampfreiniger 1 besonders effektiv zu betreiben, werden die einzelnen Bauteile bzw. Bauteilgruppen mittels einer digitalen Steuer- und Regeleinheit 18 untereinander gesteuert bzw. geregelt.

Um den Zugriff von unbefugten Dritten auf den Dampfreiniger 1 zu verhindern, weist der Dampfreiniger 1 eine Sicherheitseinheit 19 auf. Vorliegend muss vor dem Betrieb zuerst ein Sicherheitscode an die Sicherheitseinheit 19 übermittelt werden, um den Betrieb des Dampfreinigers 1 aufnehmen zu können.

Es versteht sich, dass mittels der Sicherheitseinheit 19 auch lediglich Teilbereiche des Dampfreinigers 1 vor einem unberechtigten Zugriff geschützt werden können. Beispielsweise wird zum Verstellen einer Temperatur ein Sicherheitscode angefordert. Kann dieser nicht korrekt an der Sicherheitseinheit 19 eingegeben werden, kann auch der Benutzer des Dampfreinigers 1 die Temperatur nicht verstellen.

Der Dampfreiniger 1 ist erfindungsgemäß so konzipiert, dass er autark, also ohne jegliche Versorgungsleitungen zu einer weiteren Einrichtung, betrieben werden kann.

Zwischen dem Wassertank 15 und den restlichen Bauteilen des Dampfreinigers 1 ist eine Spritzwand (hier nicht explizit dargestellt) vorgesehen. Diese dient zum einen als Spritzschutz für die elektrischen und mechanischen Bauteile und zum anderen zur zusätzlichen Stabilisierung des Gestells 2 des vorliegenden Dampfreinigers 1.

Außerdem ist an dem Dampfreiniger 1 eine Absaugeinrichtung 20 vorgesehen. Die Absaugeinrichtung 20 steht mit einer Heißdampf-Ausbringeinrichtung 21 in Verbindung, mittels welcher primär Heißdampf auf eine zu behandelnde Oberfläche 22 aufgetragen wird.

Die Ausbringeinrichtung 21 verfügt über eine Ausbringkammer 23, durch welche Heißdampf auf die Oberfläche 22 ausgebracht wird, und über eine Absaugkammer 24, über welche Reste von ausgebrachtem Heißwasser und/oder Heißdampf von der Oberfläche 22 abgesaugt werden und nach einem Reinigen wieder zum Erhitzen bereit gestellt werden. Die Ausbringeinrichtung 21 ist über eine flexible Leitung 25 mit dem Dampfreiniger 1 verbunden.

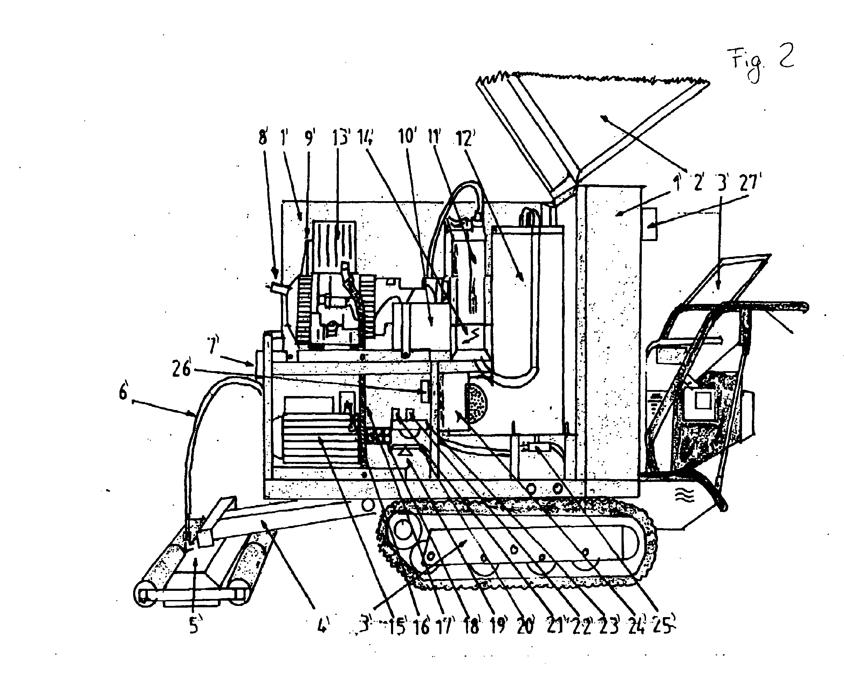

Der in Figur 2 gezeigte Dampfreiniger ist ein spezielles Ausführungsbeispiel, das eine einfache besonders praktikable Bauart zeigt. Der Wassertank 1' ist aus Edelstahl gefertigt und in seinen Abmessungen dem Trägerfahrzeug angepasst. Das Fassungsvermögen ist variabel einstellbar und liegt im vorliegenden Fall bei 308 Liter.
Das Schallisolierte Gehäuse 2' ist aufklappbar und ebenfalls aus Edelstall gefertigt. Im vorliegenden Fall ist das Gehäuse 1200 mm tief, 500 mm breit und 1060 mm hoch. Die Tiefe des Gehäuses liegt vorzugsweise zwischen 800 und 1400 mm, seine Breite zwischen 400 und 600 mm und die Höhe zwischen 800 und 1200 mm. Zum einfachen Aufklappen ist das Gehäuse mit diversen Lüftungsöffnungen und Schnellverschlüssen versehen.
Die Bezugsziffer 3' zeigt auf das Kettenfahrzeuggestell mit eigenem Antrieb als Trägerfahrzeug der Maschine und des Wassertanks. Die Führung und Aufhängung 4' des Bodenwäschers ist aus Edelstahl gefertigt und mit Schnellverschlüssen ausgestattet. Auch der Bodenwäscher 5' ist aus Edelstahl gefertigt. Mit 6 Hochdruckdüsen und 4 Laufwalzen bedient er eine Arbeitsbreite von 1000 mm. Übliche Ausführungsformen des Bodenwäschers liegen bei einer Arbeitsbreite zwischen 200 und 1200 mm.
Der Bodenwäscher 5' wird über einen speziellen Heißdampfschlauch 6' aus Teflon, Stahlgewebe und/oder Glasfasern (DN 10) mit zugelassener Prüfnummer versorgt.
Die digitale Systemsteuerung 7' weist einen Bedienercode, eine digitale Ist- und Sollwertanzeige, eine Alarmfunktion, eine wasserdichte Vollsichttüre und eine Echtzeitmessung auf. Die Startereinheit 8' wird über einen Schlüsselschalter mit Funktionscheck und der Anzeige Kühlung/Öl/Spannung bedient.
Als Spannungserzeuger 9' dient ein Dieselmotor mit 4 kW mit Elektrostarter und elektrischer Störungsabschaltung. Die Leistung des Spannungserzeugers liegt in der Regel zwischen 3 und 5 kW. Zum Starten dient eine 12 Volt Starterbatterie 10' . Ein Wechseltank 11' mit 20 Litern Volumen hat einen Saug- und Belüftungsanschluss zum einfachen wechseln der Kanister (Nato-Kanister).
Die Brenner und Lüftereinheit 12' ist aus Edelstahl gefertigt und mit Öl oder Gas betrieben mit einer Heizleistung von 80 kW und einer maximalen Dampftemperatur von 260 °C. Er entspricht der EU-Abgasnorm. Übliche Heizleistungen liegen zwischen 40 und 100 kW und die maximale Dampftemperatur sollte über 150 °C liegen. Die Abgase der Abgasanlage 13' des Dieselmotors werden durch die Maschine nach außen abgeleitet. Dies entspricht der EU-Abgasnorm. Die Hochvoltzündanlage 14' mit Flammüberwachung dient der Zündung des in die Brennkammer eingebrachten Brennstoffs. Ein Elektromotor 15' mit 230 Volt Wechselspannung und Klemmkasten dient zum Antrieb der Hochdruckpumpe (Hohlwellenmotor). Ein System-Druckschalter 16' für den Elektromotor dient zum Steuern der einstellbaren Drücke.
Die Abgasführung 17' wird je nach Trägerfahrzeug durch die Maschine aus dem Gehäuse wahlweise nach oben oder unten geführt. Die Hochdruckpumpeneinheit 18' fördert 6 bis 10 Liter pro Minute bei einem Druck von 60 bar mit einer 3 Kolben-Plungerpumpe mit Unloaderventil und Bypassfunktion. Die Hochdruckpumpeneinheit sollte mindestens 5 Liter pro Minute bei einem minimalen Druck von 40 bar fördern.
Die Wasseransaugung 19' weist einen Feinpartikelfilter und ein Rücklaufventil auf. Der Anschluss 20' ist für den Zulaufschlauch des Wassertanks mit ¾ Zoll vorgesehen. Ein Magnetventil 21' dient der automatischen Endlüftung und dem druckfreien Anlauf der Pumpe. Strömungs- und Druckwächter 22' dienen dem Steuern und Überwachen des Brenners. Sie weisen ein Rückschlagventil auf. Der Wasseranschluss 23' ist ein Hochdruckwasseranschluss für den Brennereingang.
Die elektrische Steuerung 24' besteht aus einem FI-Schutzschalter, einem Betriebsstundenzähler und einem Zeitsteuerrelais. Der Edelstahlfühlerblock 25' sitzt im Brennerausgang und ist die Verbindung zwischen dem Brenner 12', dem Fühler der digitalen Steuerung 7' und der Heißdampfleitung 6'.
Die elektrische Kraftstoffpumpe 26' dient der Versorgung und der Lüftung des Dieselmotors nach dem Tankwechsel und das Wassertankfüllsystem 27' besteht aus einem Wassereingangsfilter, einem Rücklaufventil und einer Entlüftung (1 Zoll). Der Wassertank ist nur durch ein Filtersystem zu betanken.

## Patentansprüche

1. Mobile Vorrichtung zum Behandeln einer Oberfläche mittels Heißwasser und/oder Heißdampf, ***gekennzeichnet durch*** eine Energieversorgungseinrichtung zum Bereitstellen elektrischer Energie zum autarken Betreiben der Vorrichtung.

2. Mobile Vorrichtung nach Anspruch 1, ***gekennzeichnet durch*** eine Heizeinrichtung (10) mit einer Heizleistung von mehr als 60 kW, vorzugsweise von 80 kW.

3. Mobile Vorrichtung nach einem der vorhergehenden Ansprüche, ***gekennzeichnet durch*** einen Dampferzeuger.

4. Mobile Vorrichtung nach einem der vorhergehenden Ansprüche, ***gekennzeichnet durch*** einen Kraftstofftank (8, 9), der fest aber austauschbar an der Vorrichtung (1) befestigt ist.

5. Mobile Vorrichtung nach einem der vorhergehenden Ansprüche, ***gekennzeichnet durch*** einen Wassertank (15), der aus Edelstahl hergestellt ist.

6. Mobile Vorrichtung nach einem der vorhergehenden Ansprüche, ***gekennzeichnet durch*** eine Filtereinrichtung (17), welche vorzugsweise im Bereich eines Wassertankeinfüllstutzens (16) angeordnet ist.

7. Mobile Vorrichtung nach einem der vorhergehenden Ansprüche, ***gekennzeichnet durch*** ein Gestell (2), welches aus Edelstahl hergestellt ist.

8. Mobile Vorrichtung nach einem der vorhergehenden Ansprüche, ***gekennzeichnet durch*** eine digitale Steuer- und Regeleinrichtung (18).

9. Mobile Vorrichtung nach einem der vorhergehenden Ansprüche, ***dadurch gekennzeichnet, dass*** die Vorrichtung (1) ein Gewicht von weniger als 200 kg, vorzugsweise von weniger als 180 kg, aufweist.

10. Verfahren zum Behandeln einer Oberfläche, mittels eines Mediums wie Heißwasser und/oder Heißdampf, ***dadurch gekennzeichnet, dass*** das Medium mit einer Temperatur oberhalb von 200 °C oder oberhalb von 270 °C auf die Oberfläche aufgetragen wird.
